# EUROPEAN PATENT APPLICATION

(11) **EP 4 043 773 A1**
(43) Date of publication of application: **17.08.2022**
(21) Application number: 22156172.3
(22) Date of filing: 10.02.2022
(51) Int. Cl.: F16L 37/092

(54) **DISMOUNTABLE TENSION-RESISTANT COUPLING ASSEMBLY AND METHOD FOR COUPLING AND DECOUPLING A PIPE**

(30) Priority: 12.02.2021 NL 2027549
(71) Applicant: Pipelife Nederland B.V., 1601 MA Enkhuizen (NL)
(72) Inventor: Ploeg, Mark, 1674 PX Opperdoes (NL); Kruijer, Martinus Petrus, 1705 TP Heerhugowaard (NL); Schaaper, Pim, 1689 CS Zwaag (NL)
(74) Representative: Nederlandsch Octrooibureau

(57) **Abstract**

A dismountable coupling assembly for providing a tension resistant coupling with a pipe. The dismountable coupling assembly comprising an inner tubular body having a tube opening at a proximal end for receiving the pipe end; and a tension restraining sleeve. The tension restraining sleeve has a proximal end with a sleeve opening for receiving the pipe end and a distal end connectable to the proximal end of the inner tubular body. The tension restraining sleeve may be configured to house a grip ring for providing a tension resistant coupling between the pipe and the coupling assembly and has a sleeve detachment mechanism that allows for the selective removal of the tension restraining sleeve from the coupling assembly and the pipe.

## Description

### Technical Field

The invention relates to a dismountable coupling assembly including an inner tubular body and a tension restraining sleeve. The invention also relates to a tension restraining sleeve and part thereof for use in a coupling assembly when coupling pipes. The invention further relates to a method for coupling and/or decoupling a pipe to/from a coupling assembly. The invention further relates to a method of manufacturing a dismountable tension-resistant coupling assembly. The coupling assembly can be used for coupling plastic pipes, such as water pipes.

### Background Art

Tension-resistant coupling assemblies are known to be useful for providing a quick, waterproof and tension-resistant connection between two pipes, such as drinking water pipes or sewer pressure pipes. The coupling assembly ensures that a pipe end of a pipe piece remains attached after insertion into the coupling piece, even under the influence of pressure fluids or forces applied onto the pipe or coupling assembly. This facilitates the installation of long pipelines comprising different pipe sections while minimizing leakage.

Patent document EP 3258155 B1 shows an example of a tension-resistant coupling assembly. The coupling assembly includes two grip rings in an annular chamber, wherein the first grip ring is provided with at least two arc segments. Although this coupling assembly provides advantages over the prior art in terms of installation, placement of the coupling assembly remains complicated and once the assembly has been installed and a pipe has been inserted, the pipe cannot be easily removed. For such removal, it is typically required to cut the pipe in parts, after which the cut-off pipe end including the coupling assembly is thrown away.

### Summary of Invention

According to a first aspect of the invention, there is provided a dismountable coupling assembly for coupling to a pipe end, the dismountable coupling assembly comprising an inner tubular body having a tube opening in a proximal end portion for receiving the pipe end and a tension restraining sleeve with a sleeve detachment mechanism, the tension restraining sleeve having a proximal end with a sleeve opening for receiving the pipe end and a distal end connectable to the proximal end portion of the inner tubular body, wherein the sleeve detachment mechanism allows for the selective removal of the tension restraining sleeve from the coupling assembly and pipe.

This coupling assembly can be used to provide a quick and easy secure tension-resistant coupling to one or more pipe ends. The tension resistant coupling ensures that the pipe remains attached to the coupling assembly after insertion into the tension restraining sleeve and inner tubular body, even when rather large pull-out forces are applied onto the whole of the coupling assembly and inserted pipe. Consequently, the tension resistant coupling also makes it cumbersome to dismount an already inserted pipe from the coupling assembly by just pulling along a longitudinal direction.

Here the term "longitudinal direction" is used to indicate a direction parallel to the central axis of the pipe. The term "radial direction" is used to indicate any direction perpendicular to the longitudinal direction.

The coupling assembly according to the invention can also be disassembled in a simple and efficient manner and thereby also allows for easy dismounting of a pipe coupled to the assembly. More precisely, removal of the tension restraining sleeve using the sleeve detachment mechanism allows for relaxing the grip on the pipe that is provided by the tension restraining sleeve. The removal of the tension restraining sleeve is preferably achieved in the invention by taking away the tension restraining sleeve by movement in a direction extending at least partially along a radial direction. Afterwards, the pipe may be easily pulled out of the inner tubular body.

In an embodiment, the tension restraining sleeve is configured to house a grip ring for providing a tension resistant coupling between the pipe and the coupling assembly. Such a grip ring may be removed after the tension restraining sleeve has been removed, either along a radial direction or by pulling it from the pipe end along a longitudinal direction. Alternatively, the tension restraining sleeve may directly grip the pipe without intervention of a grip ring.

The removal of the tension restraining sleeve may be done without damaging any or at least most of the components of the coupling assembly, providing the further opportunity to reuse components again in the coupling of another pipe or another coupling of the same pipe. In addition, also the grip ring and/or other rings such as a dirt gasket or seal ring provided within the coupling assembly may be reused in the coupling of another pipe. Also when the components are no longer fit to be reused, the disassembly of the coupling assembly into individual components allows for improved recycling. Typically, the individual components are each made of a single material only, which further improves the recycling possibilities.

In an embodiment, the tension restraining sleeve comprises a plurality of sleeve parts. The presence of a plurality of sleeve parts allows for the easy removal of the tension restraining sleeve from the coupling assembly with inserted pipe. In an embodiment, each sleeve part may be separately removed along a different, typically substantially radial, direction. Once the first part has been removed, the grip ring in the tension restraining sleeve may loosen and then the remainder of the coupling assembly may be easily disassembled.

According to an embodiment, the plurality of sleeve parts each extend along a longitudinal direction. Preferably, the plurality of sleeve parts contact each other along one or more contact surfaces that extend substantially along the longitudinal direction. This further contributes to the easy removal of the tension restraining sleeve. The plurality of sleeve parts may each span only part of the circumference of the tubular body, and in some embodiments they each span less than 180 degrees. This allows the sleeve parts to be taken away along a substantially radial direction easily. For example, the tension restraining sleeve may be substantially cylindrical and formed by two sleeve parts shaped as half shells of a cylinder.

It will be understood that two sleeve parts are sufficient to allow for a successful removal of the tension restraining sleeve, but more parts can be used in different embodiments. Using two sleeve parts can allow for easy assembly of the tension restraining sleeve. Nevertheless, in embodiments the tension restraining sleeve could comprising three, four, five, or more than five sleeve parts, which may be useful in different scenarios, e.g., where the coupling is very large so handling the coupling is easier in smaller parts and/or where manufacture is easier in more than two parts.

The sleeve parts may be formed separately, allowing for the removal of individual sleeve parts. The sleeve parts can contact each other along a contact surface extending at least partially along the longitudinal direction.

In an embodiment, the plurality of sleeve parts are connected to each other. Such a connection can for instance be made using a hinge or other flexible connection feature. It will be understood that in such an embodiment the tension restraining sleeve may be removed from the assembly without fully detaching the sleeve parts from each other. Alternatively, the plurality of sleeve parts may be formed as an integral body but be locally weakened, for example using a weakened line extending along the longitudinal direction of the tension restraining sleeve that allows the tension restraining sleeve to be cut or broken open easily.

In an embodiment, the sleeve parts are identical to each other. Identical parts may all be produced in the same way, minimizing production costs and allowing for optimal reuse of the components. In addition, there cannot be any confusion which component should go where when assembling the coupling assembly as all components are the same.

The tension restraining sleeve has a sleeve detachment mechanism that allows the tension restraining sleeve to be removed. The tension restraining sleeve may comprise an integrated sleeve detachment mechanism, for instance formed by multiple sleeve parts having complementary parts, which may be interlocking. Alternatively, an additional sleeve holder and/or other coupling part may be provided to hold the sleeve parts together.

Therefore, in an embodiment, the dismountable coupling assembly further comprises a sleeve holder. The sleeve holder may take up the radial load experienced by the tension restraining sleeve. For example, the sleeve holder may include a ring and/or strap provided tightly along the outer circumferential surface of the tension restraining sleeve to press the sleeve parts together, or a one sided closure that locks together two sleeve parts connected through a hinge.

In an embodiment, the sleeve holder is an outer sleeve configured to be arranged around the outer circumferential surface of the tension restraining sleeve. The outer sleeve may be configured to fit tightly around the tension restraining sleeve, thereby preventing the movement of the tension restraining sleeve along any radial direction. The outer sleeve may for instance be a substantially cylindrical tube, for example made of Polyvinylchloride (PVC). The outer sleeve may also be an elastic wrap that holds parts of the tension restraining sleeve together.

In an embodiment, the outer sleeve is provided around the tension restraining sleeve using a press-fitting technique. During normal use of the coupling assembly no significant tensile force will be exerted on the outer sleeve and therefore the connection does not need to have a large tensile strength. Consequently, the outer sleeve may be easily removed by applying a moderate tensile force along the axial direction when desired. After removal of the outer sleeve, the tension restraining sleeve becomes approachable for disassembly.

In an embodiment, the outer sleeve has a retaining edge at or near its proximal end. Here "near its proximal" end is used to indicate a position along the inner circumferential surface of the outer sleeve that extends beyond the tension restraining sleeve along the longitudinal axis once the coupling assembly has been assembled. The retaining edge prevents the outer sleeve from slipping beyond the tension restraining sleeve. The retaining edge may be provided as a circumferential edge protruding from the inner circumferential surface of the outer sleeve. This edge may extend along the entire circumference or along only part of it, or may be an interrupted set of protrusions or edges. In embodiments, the retaining edge defines an opening in the outer sleeve at the proximal end having a diameter larger than the first diameter yet smaller than an outer diameter of the tension restraining sleeve.

According to an aspect of the invention, the tension restraining sleeve is releasably connected to the inner tubular body. Once coupled, a pipe extends through the tension restraining sleeve with its pipe end extending into the inner tubular body. A fluid may flow out of the pipe end and into the inner tubular body. In high pressure applications, such as drinking water pipes or sewer pressure pipes, the inner tubular body may be suited to sustain the internal pressure of the fluid. Thus, since the pipe end connects directly to the inner tubular body, the tension restraining sleeve does not need to be suited to handle such high pressure flow, allowing for use of different materials and more flexibility in thickness/sleeve requirements.

The tension restraining sleeve and inner tubular body are connected with each other. In an embodiment, the tension restraining sleeve is provided with a connector portion at its distal end for connecting to the inner tubular body. The connector portion may be configured to fit around and connect to the proximal end portion of the inner tubular body.

The connector portion may for instance be a portion of the tension restraining sleeve that is provided with hooks, eyes or a recess to receive complementary connecting features such as straps, clips or a protruding surface extending from the proximal end portion of the inner tubular body, or vice versa. The connector portion and the complementary connecting features can provide a connection between the tension restraining sleeve and inner tubular body wherein at least movement along the longitudinal direction is blocked.

According to a further embodiment, the connector portion of the tension restraining sleeve and the proximal end portion of the inner tubular body have mating surfaces with complementary connecting features. For example, the outer circumferential wall of the inner tubular member may have an annular recess in its proximal end portion and the inner circumferential wall of the tension restraining sleeve may be locally thinner and comprise an annular protrusion that is configured to mate the dimensions of the annular recess. In an embodiment, the outer circumferential wall of the inner tubular body is provided with a first profile and the inner circumferential wall of the tension restraining sleeve is provided with a second mating profile.

In an embodiment, the tension restraining sleeve comprises one or more annular chambers for housing a grip ring and/or a dirt gasket. The tension restraining sleeve may have a circumferential inner wall with a first diameter and an annular recess in the wall forming a first annular chamber with a second diameter larger than the first diameter for housing the grip ring. Alternatively, or in addition, the tension restraining sleeve may also have a second annular chamber configured to house a dirt gasket.

In an embodiment, a dirt gasket is provided, for example in the second annular chamber of the tension restraining sleeve. The dirt gasket can prevent dirt from entering in the coupling assembly. The second annular chamber can be arranged closer to the opening at the proximal end than the first annular chamber. This configuration allows the dirt gasket to be arranged at position where it can scrape along an inserted tube end so as to strip that end of dirt that possibly clings thereto before the pipe end gets into contact with the grip ring in the first annular chamber. Alternatively, a dirt gasket may be provided in another component of the coupling assembly, such as in the sleeve holder or as a separate dirt gasket holder.

According to an embodiment, the dismountable coupling assembly further comprises one or more seal rings. Optionally, these extend through a groove along an inner circumferential surface of the inner tubular member. The one or more seal rings may be provided to avoid leakage between the pipe and the inner tubular member.

In an embodiment, the coupling assembly is configured to connect to a circular pipe having a diameter between 50 mm and 500 mm. Standard measures for pipes include pipes having for instance an outer diameter of 63 mm, 90 mm, 110 mm, 160 mm, 200 mm, 250 mm, 315 mm and 400 mm. It will be understood that the first diameter of the tension restraining sleeve and an inner diameter of the inner tubular body are approximately equal yet slightly larger than the outer diameter of the pipe.

According to an embodiment, at least one of the inner tubular body and the tension restraining sleeve are made of Polyvinylchloride (PVC). It will be understood that other materials, in particular other plastics, may be suitable as well.

In an embodiment, a grip ring is provided for providing a tension resistant coupling between the pipe and the tension restraining sleeve. The grip ring may be made of metal, for example, stainless steel. The grip ring may also be made of another material, for instance a plastic or other type of polymer.

According to an embodiment, the grip ring is configured to be easily removable from the pipe after removal of the tension restraining sleeve. Therefore in an embodiment, the grip ring comprises a plurality of grip ring parts. The plurality of parts make it easier to assemble the coupling assembly and also allow for easy removal of the grip ring during disassembly. In a preferred embodiment, the grip ring comprises three arc-shaped grip ring parts forming a circle. It will be understood that also two or more than three grip ring parts may be used. Alternatively, the grip ring may also be an open ring or hoop with a first and a second end, the ring forming at least part of a circle. For example, the grip ring may be a one-piece open grip ring describing at least 90% of a circumference of a circle. In some embodiments more than one grip ring may be provided.

According to an embodiment, the grip ring parts have substantially equal lengths, preferably wherein the grip ring parts are identical. Forming the grip ring parts with equal lengths can result in easier to placement into the chamber. When grip ring parts are identical, they can be interchanged and it is not necessary to align particular parts with other particular parts, making installation easier and quicker.

According to a further aspect of the invention, and in accordance with the advantages and effects described herein above, there is provided a tension restraining sleeve or part thereof for use in a dismountable coupling assembly.

According to yet a further aspect, and in accordance with the advantages and effects described herein above, there is provided a pipe having a pipe end coupled to a dismountable coupling assembly according to the invention. Such a pipe can for instance be made of Polyvinylchloride (PVC), but it will be understood that dependent on the application other materials may be suited also.

According to yet a further aspect of the invention, and in accordance with the advantages and effects described herein above, there is provided a method for coupling a pipe to a dismountable coupling assembly, comprising the steps of providing a dismountable coupling assembly, engaging the proximal end portion of the inner tubular body with the distal end of the tension restraining sleeve, and engaging the inner tubular body to the tension restraining sleeve to at least block movement along a longitudinal direction, and inserting an end of the pipe into the opening at the proximal end of the tension restraining sleeve and extending at least to a position within the inner tubular body. Such installation is easy and can be performed quickly.

The pipe may be inserted in a coupling assembly having an inner tubular body that houses one or more seal rings, wherein the pipe end is inserted to at least a position along the longitudinal direction that is beyond the position of the one or more seal rings.

In an embodiment, the method further comprises providing a sleeve holder around the tension restraining sleeve. This prevents the coupling assembly from accidental disengagement.

According to yet another aspect of the invention, and in accordance with the advantages and effects described herein above, there is provided a method for decoupling a pipe coupled to a dismountable coupling assembly, comprising the steps of providing a pipe connected to a dismountable coupling assembly, removing the tension restraining sleeve from the inner tubular member and the pipe by moving the tension restraining sleeve or parts thereof along a radial direction, and removing the pipe from the inner tubular body by pulling it along the longitudinal direction.

According to yet another aspect of the invention there is provided a method for manufacturing a dismountable coupling assembly. The method comprising the steps of forming an inner tubular body having a tube opening at a proximal end portion for receiving the pipe end; and forming a tension restraining sleeve with a sleeve detachment mechanism, the tension restraining sleeve having a proximal end with a sleeve opening for receiving the pipe end and a distal end connectable to the proximal end portion of the inner tubular body.

In an embodiment, the method further comprises providing the distal end of the tension restraining sleeve with a connector portion and providing the proximal end of the inner tubular body with a mating surface with complementary connecting features. Production techniques such as machining, thermoforming or injection molding may be used to provide the connector portion and/or the complementary connecting features.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.
Figure 1A schematically shows a perspective view of a coupling assembly according to a first embodiment.
Figures 1B-1C show a cross-sectional view of part of the coupling assembly according to Fig. 1A, prior to insertion of a pipe (Fig. 1B) and after insertion of the pipe into the coupling assembly (Fig. 1C).
Figure 2A presents a perspective view of a tension restraining sleeve part according to the embodiment in Figs. 1A-1C.
Figure 2B presents a cross-sectional view of the tension restraining sleeve part in Fig. 2A.
Figure 3 shows a cross-sectional view of part of the coupling assembly according to a second embodiment after insertion of a pipe.

The figures are meant for illustrative purposes only, and do not serve as restriction of the scope or the protection as laid down by the claims.

### Description of Embodiments

The following is a description of certain embodiments of the invention, given by way of example only and with reference to the figures.

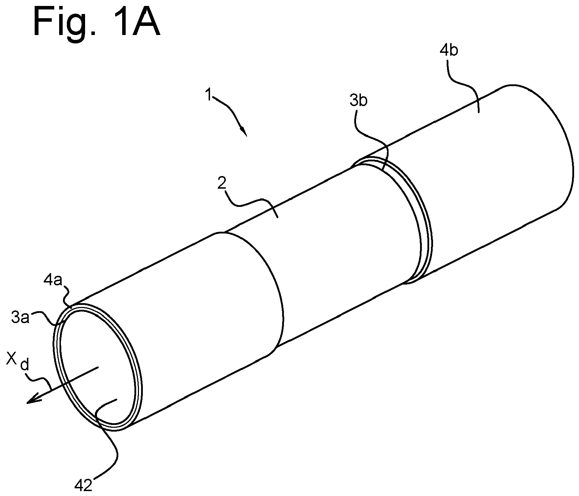

Figure 1A shows a perspective view of a coupling assembly 1 according to a first embodiment 1. The coupling assembly 1 comprises an inner tubular body 2, two tension restraining sleeves 3a, 3b and two outer sleeves 4a, 4b. A longitudinal direction X_{d} is defined as an axial direction running along a central axis of each of the inner tubular body 2, the tension restraining sleeves 3 and the outer sleeves 4, directed to point outward from an outer sleeve opening 42 of one of the outer sleeves 4a of the coupling assembly 1.

From the outside, the coupling assembly 1 can be seen as an elongated cylindrical body with wider sections at both ends formed by the two outer sleeves 4 and two tension restraining sleeves 3. All sleeves 3, 4 are arranged around an outer circumferential surface of the inner tubular body 2.

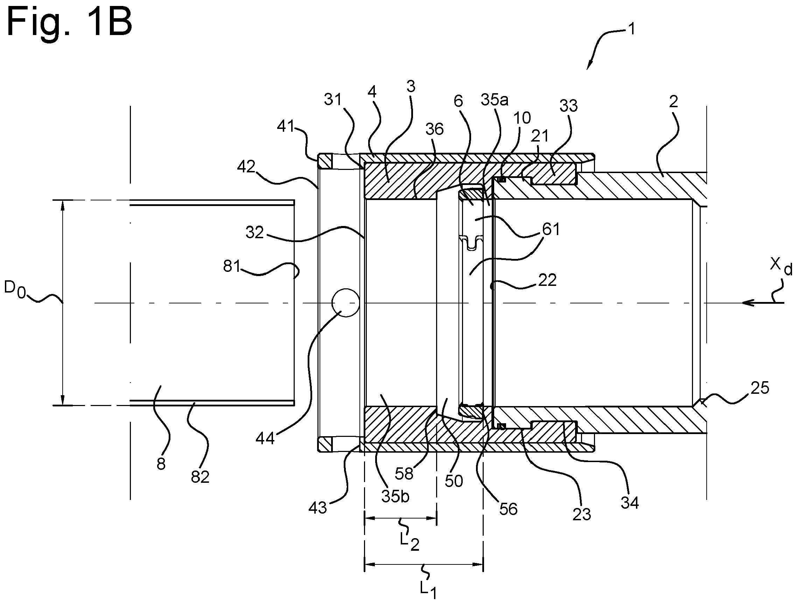

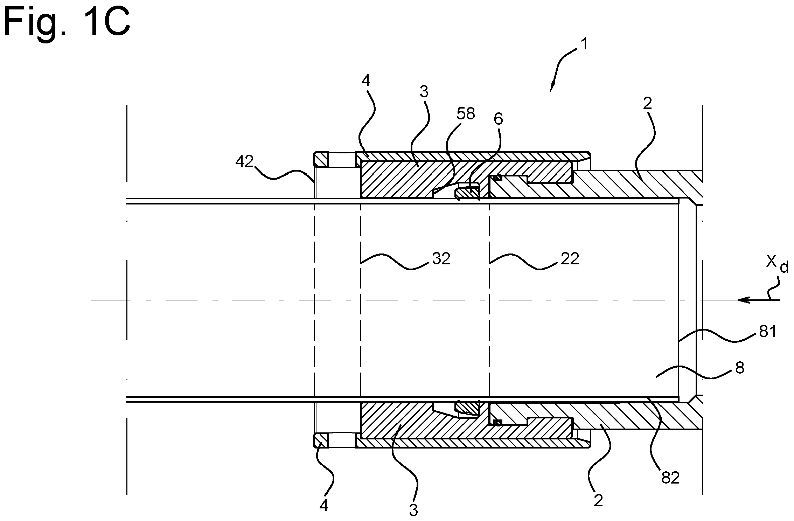

Figure 1B and 1C both show a cross-sectional side view of one end of the coupling assembly 1 according to the embodiment in Fig. 1A. Although the coupling assembly in Fig. 1A has been illustrated as a coupling piece for connecting two pipes in a straight line with each other, it will be understood that the inner tubular body 2 may also comprise a bend or a junction, allowing for the quick and easy connection between two pipes under an angle. The coupling assembly 1 may for instance facilitate an elbow coupling or a T-shaped coupling.

Fig. 1B shows one end of the coupling assembly 1 and a pipe 8 prior to inserting the pipe 8 into the coupling assembly 1. Fig. 1C shows the same end of the coupling assembly 1 after the pipe 8 has been inserted. The pipe 8 is typically made of Polyvinylchloride (PVC) and has a substantially cylindrical shape. The pipe 8 has a pipe end 81 with an outer diameter D₀ of approximately 200 mm. The coupling assembly 1 is configured to receive the pipe end 81 and grip the outer circumferential surface 82 of the pipe 8 to provide a tension-resistant coupling.

The inner tubular body 2 provides the core of the coupling assembly 1. The body 2 is elongate with a proximal end portion 21 that defines a substantially circular opening 22 for receiving the pipe end 81. Around the proximal end portion 21, a connector portion 33 of the tension restraining sleeve 3 is arranged. A mating profile of an inner circumferential surface 34 of the connector portion 33 and an outer circumferential surface 23 of the proximal end portion 21 at least block movement of the body 2, and tension restraining sleeve 3 with respect to each other along the longitudinal direction X_{d}. Consequently, the position of the inner tubular body 2 with respect to the pipe 8 is also fixed, due to the tension resistant coupling between the tension restraining sleeve 3 and the pipe 8. An outer ring 10 is provided in an annular chamber on an outer circumference of the inner tubular body 2. The outer ring 10 seals the connection between the inner tubular body 2 and the tension restraining sleeve 3. It will be understood that this outer ring 10 may also be arranged at a different location, for example in a chamber in the tension restraining sleeve, or in a chamber at a different surface of the inner tubular body, depending on the specific configuration of the connector portion 33 with respect to the proximal end portion 21 of the inner tubular body 2. It will further be understood that other alternatives can be used to seal the connection.

The inner tubular body 2 is further provided with a stop ring 25, which extends circumferentially inward and could extend fully around the inner circumference of body 2, be interrupted, or extend only part-way. The stop ring 25 locally reduces the inner diameter of the inner tubular body 2 and thereby prevents the pipe 8 from moving further into the coupling assembly 1 when the end of pipe end 81 contacts stop ring 25. The stop ring 25 is sized to not significantly affect the flow through the inner tubular body when one or more pipes are connected and a fluid is flowing through the pipe and inner tubular body. Generally this would mean that the stop ring 25 extends a distance that is not more than the thickness of the pipe 8 wall, thereby ensuring a smooth fluid flow by ensuring that the stop ring 25 does not extend radially inward substantially beyond the inner diameter of the pipe.

The tension restraining sleeve 3 consists of two separate halves 35a, 35b that are typically not connected to each other, but held together and in contact with each other by the outer sleeve 4, though in some embodiments they may have some connection (e.g., small, flexible connection between the halves). When the halves 35a, 35b have been brought in contact with each other as depicted in Fig. 1B, they form an approximately cylindrical body together. In this embodiment, the two halves 35a, 35b are identical, yet it will be understood that in other embodiments they may also differ or that three or more different parts may be used to together provide a substantially cylindrical sleeve.

The outer sleeve 4 fits around the tension restraining sleeve 3 and holds the two halves 35a, 35b together. The outer sleeve has an end 41 with an inwardly protruding retaining edge 43 which prevents the tension restraining sleeve 3 from passing through the opening 42 in the outer sleeve 4. The outer sleeve 4 may be arranged around the tension restraining sleeve 3 using a hammering device, such as a plastic hammer. The outer sleeve may be removed in a similar fashion, by tapping on the outer sleeve with the hammering device,

In this embodiment, the outer sleeve 4 is additionally provided with a plurality of circular openings 44 that allow for removal of the outer sleeve 4 from the tension restraining sleeve 3 using other types of tools such as a puller. Typically, two, three or four openings 44 are provided on the outer sleeve 4 to be engaged by hooks at two, three or four arms of a puller device. This embodiment may thus be removed in at least two different ways. It will be understood that in embodiments additional or alternative means may be provided to allow for easy removal of the outer sleeve.

The inner tubular body 2, tension restraining sleeve 3 and outer sleeve 4 are all typically made of Polyvinylchloride (PVC), though in some cases can be made of other materials.

The tension restraining sleeve 3 has an annular chamber 50 in an inner wall 36 of the tension restraining sleeve 3. The chamber 50 is spaced from the end 31 of the tension restraining sleeve 3. The end 31 defines a circular opening 32 for passage of the pipe 81. The chamber 50 can also be seen as a circumferentially extending recess of the inner wall 36. The chamber 50 is bound by a first and a second annular abutment wall 56, 58 at distances L1, L2, both larger than zero from the opening 32 defined by the proximal end 31 of the tension restraining sleeve 3.

Inside the chamber 50, a grip ring 6 is provided, typically made of stainless steel. The grip ring 6 comprises three grip ring parts 61 which are segments that each extend circumferentially in the chamber and thus form part of the grip ring 6. It will be understood that in embodiments the grip ring may also be provided integrally or comprising a different number of portions. It will further be understood by the skilled person that in embodiments also a plurality of grip rings may be provided as for instance described in EP 3258155 B1.

The grip ring 6 in this embodiment is a grip ring according to the embodiments in patent publication WO 2020/260166, which is hereby included by reference in its entirety. Use of a grip ring comprising multiple parts eases the assembly and disassembly of the coupling assembly when inserting a pipe or dismounting a pipe from the assembly.

The coupling assembly 1 as depicted in Fig. 1B can be easily and quickly assembled. The tension restraining sleeve halves 35 can be arranged around the inner tubular body 2 and afterwards the outer sleeve 4 is provided around the tension restraining sleeve to fix the sleeve halves 35 together. The grip ring 6 may be arranged in the annular chamber 50 while engaging the tension restraining sleeve halves 35 and the inner tubular body 2, or alternatively may be arranged in the annular chamber 50 after the outer sleeve has been arranged. After assembly, a pipe 8 may be inserted.

Fig. 1C shows the coupling assembly 1 according to Fig. 1A and Fig. 1B after insertion of the pipe 8 along the longitudinal direction X_{d} into the coupling assembly 1. The pipe has subsequently been passed through the outer sleeve opening 42, tension restraining sleeve opening 32, and inner tubular body opening 22. During insertion, the pipe end 81 has pressed the grip ring 6 away from the second abutment wall 58. The grip ring 6 and grip ring parts are also pushed apart in the radial direction such that the diameter of the grip ring 6 increases, allowing the pipe end 81 through. The grip ring 6 grips onto the outer circumferential surface 82 of the pipe and may even cut slightly into the outer wall of the pipe 8 if the pipe 8 is pulled away from the coupling assembly 1 along axis X_{d}. As such, a tension-resistant coupling is achieved.

The tension-resistant coupling disallows the easy removal of the pipe 8 by pulling it along the longitudinal direction. Nevertheless, the pipe 8 may be easily dismounted by disassembling the coupling assembly 1. The outer sleeve 4 is provided around the tension restraining sleeve using a press-fitting technique. Therefore the outer sleeve 4 can relatively easily be pulled off using a tensile force along the longitudinal direction Xd. The openings 44 make it easy to grip the outer sleeve 4 and remove it.

Once the outer sleeve 4 has been removed, the tension restraining sleeve 3 may be subsequently removed by picking up one or both of the sleeve halves 35 with a movement that extends along a radial direction. After that, the pipe 8, which extends also within the inner tubular body 2, can easily be extracted from the inner tubular body 2 by pulling it out along the longitudinal direction.

The grip ring 6 will typically remain arranged around the pipe 8 when the tension restraining sleeve 3 has been removed. The grip ring 6 may generally also be easily removed if it comprises a plurality of grip ring parts 61. Nevertheless, in embodiments the grip ring may also be a one-piece grip ring. In those cases it is needed to slide the grip ring 6 along outer circumferential surface 82 to the pipe end 81. Since movement of the grip ring 6 is no longer blocked by the abutment walls 56, 58 of the annular chamber 50, the grip ring 6 should relatively easily slide off.

Both the assembly and disassembly of the coupling assembly 1 take place in a manner wherein the parts are not damaged. This typically allows for the reuse of the components and therefore makes the coupling assembly 1 more sustainable than alternative coupling assemblies that need to be thrown away after use. Ideally, all the components are reused but it will be understood that the skilled person may judge whether all parts are still in sufficiently good shape to be reused. For example, the skilled person may decide to reuse only the grip ring 6 and sleeves 3,4 while replacing the inner tubular body 2. Components that are not reused can be recycled easily, as each of the components preferably is made of a single material only.

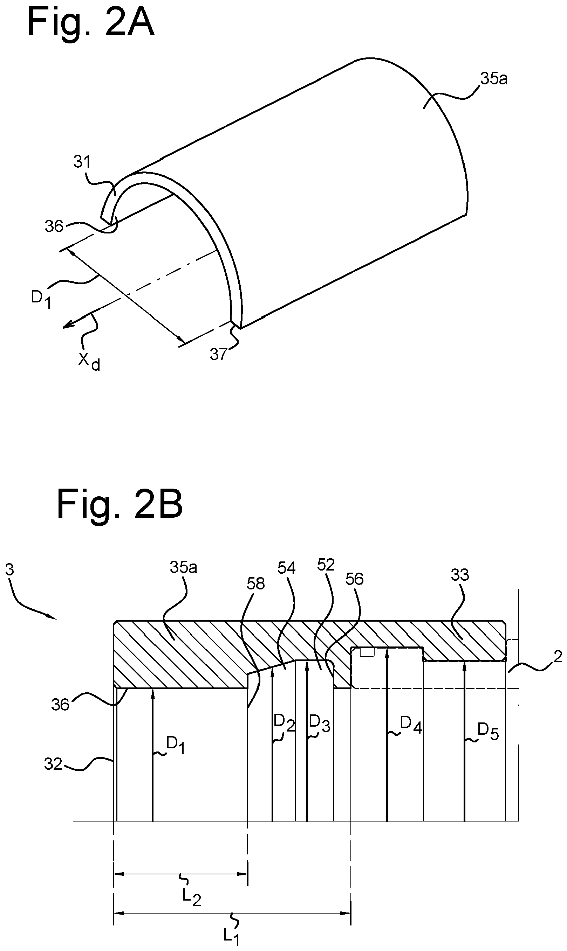

Fig. 2A shows a perspective view of one half 35a of the tension restraining sleeve 3 according to the first embodiment in Fig. 1A-1C. The contact surface 37, where the first half 35a connects to a second identical half 35b (not shown) to form the restraining sleeve 3 is substantially planar. This allows quick assembly of the tension restraining sleeve by holding the two halves 35 together. It will be understood though that there are several shapes of the contact surface 37 that may be used, for example complementary interlocking parts or complementary fitting, but not interlocking parts.

The halves 35 can be held together by the outer sleeve 4, but it will be understood that alternatives may also be used. Occasionally, when complementary interlocking parts are used for the sleeve halves 35 it may not be required to provide a separate component to fulfil this function and a sleeve detachment mechanism may be integrated in the tension restraining sleeve itself.

Fig. 2B shows a cross-sectional view along the longitudinal axis X_{d} of a detail of the tension retraining sleeve halve 35a. The inner circumferential wall 36 of the sleeve 3 has a first diameter D1 and is configured to abut the outer circumferential surface 82 of the pipe 8 over the full length of the tension restraining sleeve 3 after the pipe end 81 has been inserted in the coupling assembly.

The first annular chamber 50 can be comparable to the chamber discussed in EP3258155B1, which document is incorporated herein by reference in its entirety. The chamber 50 has a rotational symmetry around the longitudinal axis X_{d}. The chamber 50 is provided with a first chamber portion 54 and a second chamber portion 52. The first chamber portion 54 extends from the second abutment wall 58 in the direction away from the opening 32. The second chamber portion 52 extends from the first chamber portion 54 away from the opening 32.

The first chamber portion 54 is tapered towards the opening 32 of the sleeve portion 35a. The first chamber portion 54 is connected to the second chamber portion 52 and is closer to the opening 32 than the second chamber portion 52. The chamber 50 is further provided with a first (annular) abutment wall 56 at a distance L1 other than zero from the opening 32 and opposite the second abutment wall 58. It holds that L1 is greater than L2. The second abutment wall 58 is located between the opening 32 and the first abutment wall 56.

The second chamber portion 52 of the chamber 50 extends between the first chamber portion 54 of the chamber 50 and the first abutment wall 56. The abutment walls 56, 58 define the chamber and form blockages for the grip ring 6 so that it is secured inside the chamber 50.

The inner wall 36 has a diameter D1. The first chamber portion 54 has a second diameter D2. The second chamber portion 52 has a third diameter D3. The second diameter D2 is decreasing in the direction of the opening 32. The first diameter D1 is smaller than or equal to the second diameter D2, and the second diameter D2 is smaller than or equal to the third diameter D3. The second chamber portion 52 is tapered towards the opening 32. It holds that D1 ≤ D2 ≤ D3. In some embodiments, the chamber 50 could have only one diameter, without a tapered section, or instead, only a tapered section without a section with a constant diameter.

The specific configuration of the annular chamber 50 allows for providing an efficient tension resistant coupling. When a pipe 8 is inserted, the pipe end 81 presses the grip ring 6 away from the second abutment wall 58. In addition, the grip ring parts 61 are pushed apart in the radial direction such that the diameter of the grip ring 6 increases, allowing the pipe end 81 through. The grip ring 6 grips into the outer wall 82 of the pipe 8. When the pipe 8 is pulled away from the coupling assembly, the grip ring 6 may slightly cut into the outer wall 82 of the pipe 8 to prevent disengagement.

At the distal end of the sleeve, a connector portion 33 is provided. The connector portion 33 is thinner than the remainder of the tension restraining sleeve 3, the thinner portion having an inner diameter D5, where D1 ≤ D5. The connector portion 33 further comprises an annular groove having a diameter D4 that allows for interlocking with a portion of the inner tubular body 2 to prevent movement along the longitudinal direction. The proximal end portion 21 of the inner tubular body 2 has been schematically indicated.

The connector portion 33 preferably grips around the inner tubular body as this eases the assembly of the coupling assembly 1. Nevertheless, it will be understood that it is also possible to arrange the inner tubular body 2 and tension restraining sleeve 3 in a way where the inner tubular body 2 connects around the connector portion 33 of the tension restraining sleeve 3.

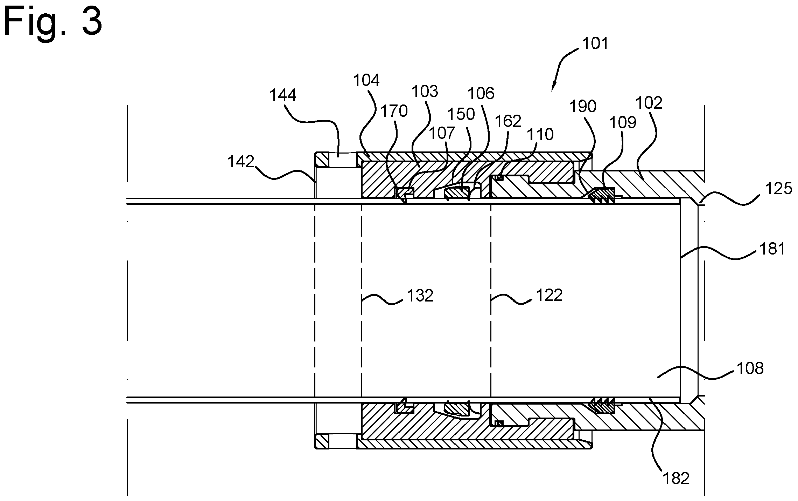

Figure 3 shows another embodiment of the coupling assembly. Features in the coupling assembly that have already been described above with reference to the first embodiment (and in particular figures 1 and 2) may also be present in the coupling assembly 101 shown in figure 3 and will not all be discussed here again. For the discussion with reference to figure 3, like features are designated with similar reference numerals preceded by 100, to distinguish the embodiments.

Figure 3 shows a cross-sectional side view of the coupling assembly 101 after a pipe 108 has been inserted. In addition to the annular chamber 150, which in this embodiment is referred to as a first annular chamber, the tension restraining sleeve 103 comprises a second annular chamber 170.

In the first annular chamber 150 a wave spring 162 has been provided in addition to a grip ring 106. As explained in patent publication WO 2020/260166 a wave spring or any other biasing member contributes to an efficient and strong tension resistant coupling. The wave spring 162 keeps the grip segments 161 in position. After insertion of the pipe 108, the wave spring 162 keeps pressing against the grip ring 106 along the longitudinal direction. Consequently, the grip ring parts 161 are pressed against the pipe wall 182 by the wave spring 162, which pressing provides additional tensile resistance. Some embodiments would not include a wave spring.

The second annular chamber 170 is provided between the opening 132 and the first annular chamber 150. The second annular chamber 170 has a diameter larger than the first diameter D1 and is configured to receive a dirt gasket 107. The dirt gasket 107 is arranged to prevent dirt from entering into the coupling assembly 101 and the first annular chamber 150. Alternatively, a dirt gasket 107 could also be provided in the outer sleeve 104.

In this embodiment, the inner tubular body 102 comprises an annular groove 109 for housing one or more seal rings 109. After insertion of the pipe 108, the pipe end 181 extends into the tubular body 102. To prevent leakage along the circumferential pipe wall 182, a seal ring 109 is provided. In embodiments a plurality of seal rings 109 may be provided.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

After dismounting the pipe 108 from the coupling assembly 101 and removal of the tensions restraining sleeve 103, also the dirt gasket 107 and one or more seal rings 109 can be removed in an intact manner. Although these parts may be reused, typically, the dirt gasket 107 and the one or more seal rings 109 are replaced and recycled separately.

For example, in the present embodiments the coupling assembly has been illustrated as a coupling piece for connection a pipe at both connector ends. In embodiments, the inner tubular body of the coupling assembly may be part of another pipe, a separate coupling piece or part of one of those. In embodiments, the inner tubular body is provided with a tension restraining sleeve at both ends of the inner tubular body. The position of those ends with respect to one another may vary, allowing two pipes to be coupled in line with each other or under an angle, for instance to provide an elbow coupling or a T-shaped coupling.

## Claims

1. A dismountable coupling assembly for coupling to a pipe end, the dismountable coupling assembly comprising:
- an inner tubular body having a tube opening in a proximal end portion for receiving the pipe end; and
- a tension restraining sleeve with a sleeve detachment mechanism, the tension restraining sleeve having a proximal end with a sleeve opening for receiving the pipe end and a distal end connectable to an outer circumferential surface of the inner tubular body at the proximal end portion of the inner tubular body, wherein the sleeve detachment mechanism allows for the selective removal of the tension restraining sleeve from the coupling assembly and the pipe.

2. The dismountable coupling assembly according to claim 1, wherein the tension restraining sleeve comprises a plurality of sleeve parts.

3. The dismountable coupling assembly according to claim 2, wherein the plurality of sleeve parts each extend along a longitudinal direction.

4. The dismountable coupling assembly according to any of the preceding claims, further comprising a sleeve holder comprising an outer sleeve configured to be arranged around an outer circumferential surface of the tension restraining sleeve.

5. The dismountable coupling assembly according to claim 4, wherein the outer sleeve has a retaining edge at or near its proximal end.

6. The coupling assembly according to any preceding claim, wherein the tension restraining sleeve is provided with a connector portion at its distal end for connecting to the inner tubular body.

7. The coupling assembly according to claim 6, wherein the connector portion of the tension restraining sleeve and the proximal end portion of the inner tubular body have mating surfaces with complementary connecting features.

8. The dismountable coupling assembly according to any of the preceding claims, wherein the tension restraining sleeve is configured to house a grip ring for providing a tension resistant coupling between the pipe and the coupling assembly, and/or wherein the tension restraining sleeve comprises one or more annular chambers for housing a grip ring and/or a dirt gasket.

9. The dismountable coupling assembly according to any of the preceding claims, further comprising a dirt gasket and/or one or more seal rings.

10. The dismountable coupling assembly according to any of the preceding claims, wherein the coupling assembly is configured to connect to a circular pipe having a diameter between 50 mm and 500 mm.

11. The dismountable coupling assembly according to any one of the preceding claims, wherein at least the inner tubular body and the tension restraining sleeve are made of Polyvinylchloride (PVC).

12. The dismountable coupling assembly according to any of the preceding claims, wherein a grip ring is provided for providing a tension resistant coupling, preferably wherein the grip ring is made of metal, more preferably stainless steel.

13. The dismountable coupling assembly according to claim 12 wherein the grip ring comprises a plurality of grip ring parts.

14. A pipe having a pipe end coupled to a dismountable coupling assembly according to any of claims 1-13.

15. A method for manufacturing a dismountable coupling assembly, comprising the steps of:
- forming an inner tubular body having a tube opening at a proximal end portion for receiving the pipe end; and
- forming a tension restraining sleeve with a sleeve detachment mechanism, the tension restraining sleeve having a proximal end with a sleeve opening for receiving the pipe end and a distal end connectable to an outer circumferential surface of the inner tubular body at a proximal end portion of the inner tubular body, wherein the sleeve detachment mechanism allows for the selective removal of the tension restraining sleeve from the coupling assembly and a pipe, preferably further comprising the steps of:
- providing the distal end of the tension restraining sleeve with a connector portion; and
- providing the proximal end portion of the inner tubular body with a mating surface with complementary connecting features.
